# EUROPEAN PATENT SPECIFICATION

(11) **EP 0 513 250 B1**
(45) Date of publication and mention of the grant of the patent: **23.08.1995**
(21) Application number: 91914187.9
(22) Date of filing: 06.02.1991
(51) Int. Cl.: H04B 7/005, H04B 7/26

(54) **BASE STATION FOR A RADIO SYSTEM**
BASISSTATION FÜR FUNKSYSTEM
STATION DE BASE POUR SYSTEME RADIO

(30) Priority: 08.02.1990 FI 900620
(43) Date of publication of application: 19.11.1992
(73) Proprietor: NOKIA TELECOMMUNICATIONS OY, 02600 Espoo (FI)
(72) Inventor: KORHONEN, Pertti, SF-90550 Oulu (FI); KORHONEN, Jukka, SF-90550 Oulu (FI); HUTTUNEN, Pertti, SF-90540 Oulu (FI)
(74) Representative: Tomlinson, Kerry John
(86) International application number: FI9100035
(87) International publication number: WO9112675

(56) References cited:
- EP-A- 0 130 873
- EP-A- 0 164 108
- PATENT ABSTRACTS OF JAPAN, Vol 11, No. 11, E470, Abstract of JP 61-184 935,publ 1986-08-18 OKI ELECTRIC IND CO LTD.

## Description

The invention relates to a base station for a radio system, the base station comprising, for monitoring the quality of a radio link between a base station and mobile stations, a filter means for generating a monitoring signal from a rectangular wave signal having a desired monitoring signal frequency, the frequency of the monitoring signal being variable by varying the frequency of the rectangular signal; a transmitter means for transmitting the monitoring signal to a mobile radio station; a receiver means for receiving the monitoring signal transmitted back from the mobile radio station; signal processing means for determining the quality of the used radio link by means of the received monitoring signal.

In the Nordic Mobile Telephone (NMT) system, the quality of the radio link between a base station and a mobile telephone is monitored by means of special monitoring signals. The base station generates the monitoring signal by low-pass filtration from a clock signal having a desired monitoring signal frequency. The NMT system utilizes four monitoring signal frequencies at intervals of 30 Hz. The base station transmits a monitoring signal to a mobile telephone which returns the monitoring signal immediately to the base station, and the base station determines the quality of the used radio link, especially the signal-noise ratio, by means of the received monitoring signal.

In base stations presently in use, the apparatus which generates the monitoring signal, measures the signal-noise ratio, and identifies the frequency of the monitoring signal coming to the base station is based on time continuous filters accomplished with discrete components, whereby each filter operation is performed with the same fixed filter for all four monitoring signal frequencies. On account of the fixed passband of the filters and the resultant different filtering functions at different frequencies, there thus occurs a difference in level between the monitoring signals, which becomes apparent as variation in the deviation of the monitoring signal applied from the base station to the mobile telephone. The level difference of the monitoring signals also affects the measuring accuracy of the S/N ratio.

The base station also measures the frequency of the received monitoring signal to ensure that it measures the right mobile station. For identification purposes, it is sufficient to know whether the frequency is the right one or some of the four other possible frequencies. The identification of monitoring signals also suffers from the above-mentioned level difference between the monitoring signals, as the identification is based on the mixing of the received monitoring signal and an injection signal positioned at an interval of 60 Hz from the monitoring signal, and on the bandpass filtration and detection of the resulting difference signal.

EP-A-164108 describes a filter circuit for providing power equalisation on digital transmission lines.

The object of the present invention is a base station which avoids the above-mentioned drawbacks associated with monitoring signals.

This is achieved according to the first embodiment of the invention by means of a base station which is characterized in that the filter means comprises a filter accomplished by the Switched capacitor technique and controlled by a clock signal synchronized with the rectangular wave signal.

A base station according to the second embodiment of the invention is characterized in that the signal processing means comprises filters accomplished by the Switched capacitor technique and controlled by one or more clock signals synchronized with the monitoring signal.

The invention utilizes the property of filters accomplished by the Switched capacitor technique that their center and/or cut-off frequencies are dependent on the frequency of the clock signal controlling them. When the clock signals of the Switched capacitor filters are synchronized with a rectangular wave signal and the frequency of the clock signals varies in the same proportion as the frequency of the rectangular wave signal, the Switched capacitor filter is automatically adopted to the new monitoring signal frequency, whereby all the signal processing functions performed by the filters are identical for all monitoring signals irrespective of the frequency. Thereby the level of the monitoring signal remains constant at all the different monitoring signal frequencies. In the preferred embodiment of the invention, the clock signals of the filters are derived from the same primary clock signal as the rectangular wave signal, that is, the monitoring signal frequency. In addition, as the signal frequencies are changed by varying the frequency of the primary clock signal, the signals can be synchronized and a constant frequency ratio can be obtained between the signals in a simple way.

Even though the use of the Switched capacitor filters already provides an improvement over prior art when used in the generation of the monitoring signals or, alternatively, in the signal processing of the received monitoring signal, the best results will be obtained by using Switched capacitor filters both in generation and reception.

A further advantage achieved by the Switched capacitor technique is that it enables a high integration level for the apparatus.

The invention will now be described in greater detail with reference to the attached drawing, in which

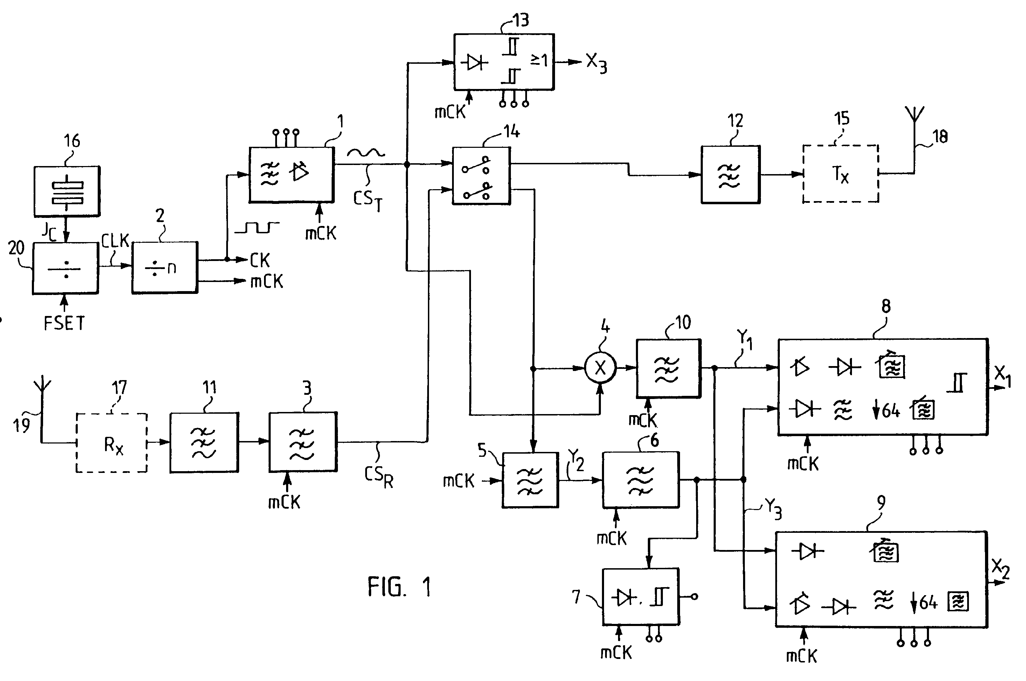

Figure 1 is block diagram of a base station portion required for the processing of monitoring signals.

The NMT system is a so-called cellular telephone system in which a geographical area covered by the system is divided into smaller, adjoining geographical areas or cells each comprising one or more fixed base stations in communication with mobile telephones within the cell. The structure of the NMT system will not be described in greater detail herein; instead, the following citations are referred to:
[1] NMT Doc.4.1981 Technical Specification for the Base Station Equipment
[2] NMT Doc.900-4 Technical Specification for the Base Station Equipment
[3] Addendum to NMT Doc.900-4 Revised 1988-04-01.
[4] NMT Doc. 900-1.

The above specifications are also referred to with regard to the signalling between the base station and the mobile telephone, and especially with regard to the monitoring signals.

Referring to Figure 1, the generation of monitoring signals at the base station will be discussed at first. The base station comprises a source generating a clock signal, such as a crystal oscillator 16 which applies a clock signal f_{c} to an adjustable divider circuit 20. The divider circuit 20 divides the clock signal f_{c} by a divisor determined by a frequency setting signal FSET, thus forming a primary clock signal CLK. The primary clock signal CLK is divided with a fixed divider circuit 2 which produces a rectangular wave signal CK having the monitoring signal frequency and one or more filtration clock signals mCK the frequency of which is preferably the multiple of the frequency of the signal CK. The rectangular wave signal CK is low-pass filtered by a low-pass filtration block 1 which contains a Switched capacitor low-pass filter and level adjustment. The SC filter is controlled by the clock signal mCK, whereby its cut-off frequency is automatically adopted to the frequency of the rectangular wave signals. An output signal from the filtration block 1 is a sinusoidal monitoring signal CS_{T}, which in normal operation is applied through a switch unit 14 to a time continuous low-pass filter 12 which filters the clock signal mCK from the monitoring signal. An output signal from the filter 12 is applied to a transmitter unit 15 at the base station to be transmitted through a transmitter antenna 18 to a mobile radio station.

The monitoring signal CS_{T} is also applied to a level indicator 13 which monitors the level of the monitoring signal, thus ensuring that it is in a window between predetermined limit values. If the level of the monitoring signal falls outside this window, the indicator 13 generates a signal X₃ which can be used e.g. for the control of the level adjustment of the block 1.

The monitoring signal returned from the mobile station and received at the base station by a receiver antenna 19 and a receiver portion 17 is low-pass filtered by a normal time continuous low-pass filter 11 which limits the upper end of the frequency band of the monitoring signal so as to prevent aliasing at subsequent stages. An output signal from the filter 11 is filtered by the Switched capacitor bandpass filter to make the monitoring signal more distinguishable from the noise. The center frequency of the bandpass filter 3 automatically obtains a value suitable for the monitoring signal frequency, as the filter is clocked by means of the above-mentioned clock signal mCK.

The received monitoring signal CS_{R} at the output of the filter 3 is applied through the switch unit 14 to a mixer 4 and a bandpass filter 5. In the mixer 4, the received monitoring signal CS_{R} is mixed with the transmitted monitoring signal CS_{T} or another injection signal having the monitoring signal frequency, whereby the difference frequency is zero and only a noise signal and the sum frequency of the mixed signals, in this case twice the monitoring signal frequency, occur at the output of the mixer. The sum frequency and the dc component are filtered from the noise signal by the dc blocking and the Switched capacitor low-pass filter 10, which results in the formation of a signal Y₁ proportional to the noise around the monitoring signal frequency. The low-pass filter 10 is controlled by means of the above-mentioned clock signal mCK, whereby its cut-off frequency is automatically adjusted to a value suitable for each monitoring signal frequency.

The control signal CS_{R} received in the other branch is filtered with the twopath-type bandpass filter 5 having an adjustable bandwidth, preferably below 1 Hz. To decrease the rise time of the filter, the filtration is, however, started with a proportionally wider bandwidth from which the band-width is decreased to a suitable value, e.g., through three steps during 100 ms. The bandpass filter 5 is controlled by means of the above-mentioned clock signal mCK, which determines its center frequency. The bandpass filter 5 filters noise from the received monitoring signal CS_{R}, which gives as a result a pure monitoring signal Y₂. The signal Y₂ is further bandpass filtered with a Switched capacitor bandpass filter 6 having a wider passband than the filter 5 in order to filter the harmonic frequencies formed in the filter 5 from the signal Y₂. The filter 6 is also controlled by the above-mentioned clock signal mCK. An output signal Y₃ from the filter 6 and the noise signal Y₁ are both applied to two signal processing blocks 8 and 9, in which the signal is amplified, rectified, low-pass filtered, decimated, integrated and finally the dc voltages proportional to the signals are compared. By amplifying either the signal Y₃ or the noise signal Y₁ in their own branches, a threshold value for the S/N ratio can be set, whereby the comparison result indicates whether the S/N ratio is above or below this threshold value. The S/N ratio may have two monitoring threshold values: the upper threshold value, which is within the range from 10 to 40 dB, indicates that the quality of the radio link is so poor that it is advisable to establish a new radio link, and the lower threshold value, which is in the range from -5 to +10 dB, causes the call to be disconnected if a better radio link has not been found. In the blocks 8 and 9, all the filter operations are realized with Switched capacitor filters which are controlled by the above-mentioned clock frequency mCK.

The received monitoring signal is identified by monitoring the level of the output signal Y₃ of the bandpass filter 6 by means of the level indicator 7. The level indicator 7 compares the level of the signal Y₂ with a predetermined threshold value and identifies the received monitoring signal if the level of the signal exceeds the predetermined threshold level.

The internal structure of the Switched capacitor filters used in the invention is known to one skilled in the art. The basic idea of the Switched capacitor technique is that resistance can be simulated by means of a capacitor and switches, that is, when the resistance R of a so-called "normal" RC filter structure is replaced with this kind of structure, the filter parameters can be determined by the relations of the capacitances and the clock frequency controlling the switches. As to the structure and implementation of the Switched capacitor filters, "Analog MOS Integrated Circuits for Signal Processing", R. Gregorian & G.C. Temes, Wiley, 1986 (p. 265-296) is referred to.

By means of the switch unit 14, the monitoring signal CS_{T} to be transmitted can be applied directly to the mixer 4 and to the bandpass filter 5, when there is no speech communication between the mobile radio station and the base station.

The drawing and the description related to it are only intended to illustrate the present invention. In its details, the base station of the invention may vary within the scope of the attached claims. For instance, there can be several clock signals for controlling the Switched capacitor filters and they can be generated from different primary clock signals than the rectangular wave signal having the monitoring signal frequency. In this case, however, it has to be attended to separately that the clock signals are synchronized and their frequency varies in the same proportion as the rectangular wave.

## Claims

1. Base station for a radio system, the base station comprising, for monitoring the quality of a radio link between a base station and mobile stations,
a filter means (1,2,16) for generating a monitoring signal from a rectangular wave signal (CK) having a desired monitoring signal frequency, the frequency of the monitoring signal being variable by varying the frequency of the rectangular signal;
a transmitter means (15) for transmitting the monitoring signal to a mobile radio station;
a receiver means (17) for receiving the monitoring signal transmitted back from the mobile radio station;
signal processing means (3 to 11) for determining the quality of the used radio link by means of the received monitoring signal, characterized in that the filter means (1) comprises a filter accomplished by the Switched capacitor technique and controlled by a clock signal (mCK) synchronized with the rectangular wave signal (CK).

2. Base station according to claim 1,
characterized in that said filter means is a low-pass filter.

3. Base station according to claim 1 or 2,
characterized in that the rectangular wave signal (CK) and the clock signal (mCK) are derived from the same primary clock signal (CLK) by means of divider circuits (2).

4. Base station according to claim 1, 2 or 3,
characterized in that the frequency of the clock signal (mCK) is the multiple of the rectangular wave signal (CK).

5. Base station for a radio system, the base station comprising, for monitoring the quality of a radio link between a base station and mobile stations,
a filter means (1,2,16) for generating a monitoring signal from a rectangular wave signal (CK) having a desired monitoring signal frequency, the frequency of the monitoring signal being variable by varying the frequency of the rectangular signal;
a transmitter means (15) for transmitting the monitoring signal to a mobile radio station;
a receiver means (17) for receiving the monitoring signal transmitted back from the mobile radio station;
signal processing means (3 to 11) for determining the quality of the used radio link by means of the received monitoring signal, characterized in that the signal processing means comprise filters (3,5,6,8,9) accomplished by the Switched capacitor technique and controlled by one or more clock signals (mCK) synchronized with the monitoring signal.

6. Base station according to claim 5, characterized in that the rectangular wave signal (CK) and the clock signal (mCK) are derived from the same primary clock signal (CLK) by divider circuits (2).

7. Base station according to claim 5 or 6, characterized in that the frequency of the clock signal (mCK) is the multiple of the rectangular wave signal (CK).

8. Base station according to claim 5, 6 or 7, characterized in that the signal processing means comprise, for identifying the received monitoring signal, a narrow-band bandpass filter (5) for filtering the noise from the monitoring signal, and a comparator means (7) for detecting the level of the bandpass-filtered signal and for giving an identification signal if the level of the signal exceeds a predetermined threshold level.

9. Base station according to any of the claims 5 to 8, characterized in that the signal processing means comprise, for determining the S/N ratio of the received monitoring signal
a bandpass filter (5) for filtering the noise from the monitoring signal;
a mixer (4) for mixing the received monitoring signal with the transmitted monitoring signal, and a Switched capacitor low-pass filter (10) for filtering the output signal of the mixer, an output signal from the low-pass filter (10) being a signal proportional to the noise present in the received monitoring signal;
means (8,9) for determining the S/N ratio by means of said signal proportional to the noise and said bandpass-filtered monitoring signal.

10. Base station according to claim 8 or 9, characterized in that said noise-filtering bandpass filter (5) is a multipath filter having a bandwidth preferably less than 1 Hz.

11. Base station according to claim 9, characterized in that a second Switched capacitor bandpass filter (6) having a relatively wider bandwidth is connected between the noise-filtering bandpass filter (5) and the means (8,9) determining the S/N ratio.

## Patentansprüche

1. Basisstation für ein Funksystem, wobei die Basisstation zur Überwachung der Qualität einer Funkverbindung zwischen einer Basisstation und mobilen Stationen folgendes aufweist:
- eine Filtereinrichtung (1, 2, 16) zum Erzeugen eines Überwachungssignals aus einem Rechteckwellensignal (CK) mit einer gewünschten Überwachungssignalfrequenz, wobei die Frequenz des Überwachungssignals durch Variieren der Rechtecksignalfrequenz veränderbar ist;
- eine Sendeeinrichtung (15), um das Überwachungssignal zu einer mobilen Funkstation zu senden;
- eine Empfangseinrichtung (17), um das Überwachungssignal, das von der mobilen Funkstation zurückgesendet wird, zu empfangen;
- Signal-Bearbeitungseinrichtungen (3 bis 11), um die Qualität der benutzten Funkverbindung mittels des empfangenen Überwachungssignals zu bestimmen,
dadurch gekennzeichnet,
daß die Filtereinrichtung (1) einen Filter aufweist, der nach der Technik geschalteter Kondensatoren hergestellt ist und durch ein Taktsignal (mCK) gesteuert wird, das mit dem Rechteckwellensignal (CK) synchronisiert ist.

2. Basisstation nach Anspruch 1,
dadurch gekennzeichnet, daß die Filtereinrichtung ein Tiefpaßfilter ist.

3. Basisstation nach den Ansprüchen 1 oder 2,
dadurch gekennzeichnet, daß das Rechteckwellensignal (CK) und das Taktsignal (mCK) aus demselben primären Taktsignal (CLK) mittels Teilerschaltungen (2) abgeleitet sind.

4. Basisstation nach den Ansprüchen 1, 2 oder 3,
dadurch gekennzeichnet, daß die Frequenz des Taktsignals (mCK) das Vielfache der Frequenz des Rechteckwellensignals (CK) ist.

5. Basisstation für ein Funksystem, wobei die Basisstation zur Überwachung der Qualität einer Funkverbindung zwischen einer Basisstation und mobilen Stationen folgendes aufweist:
- eine Filtereinrichtung (1, 2, 16) zum Erzeugen eines Überwachungssignals aus einem Rechteckwellensignal (CK) mit einer gewünschten Überwachungssignalfrequenz, wobei die Frequenz des Überwachungssignals durch Variieren der Rechtecksignalfrequenz veränderbar ist;
- eine Sendeeinrichtung (15), um das Überwachungssignal zu einer mobilen Funkstation zu senden;
- eine Empfangseinrichtung (17), um das Überwachungssignal, das von der mobilen Funkstation zurückgesendet wird, zu empfangen;
- Signal-Bearbeitungseinrichtungen (3 bis 11), um die Qualität der benutzten Funkverbindung mittels des empfangenen Überwachungssignals zu bestimmen,
dadurch gekennzeichnet,
daß die Signal-Bearbeitungseinrichtungen Filter (3, 5, 6, 8, 9) aufweisen, die nach der Technik geschalteter Kondensatoren hergestellt sind und von einem oder mehreren Taktsignalen (mCK) gesteuert werden, die mit dem Überwachungssignal synchronisiert sind.

6. Basisstation nach Anspruch 5,
dadurch gekennzeichnet, daß das Rechteckwellensignal (CK) und das Taktsignal (mCK) von demselben primären Taktsignal (CLK) durch Teilerschaltungen (2) abgeleitet sind.

7. Basisstation nach Anspruch 5 oder 6,
dadurch gekennzeichnet, daß die Frequenz des Taktsignals (mCK) das Vielfache der Frequenz des Rechteckwellensinals (CK) ist.

8. Basisstation nach den Ansprüchen 5, 6 oder 7,
dadurch gekennzeichnet, daß die Signal-Bearbeitungseinrichtungen zur Identifizierung des empfangenen Überwachungssignals ein schmalbandiges Bandpaßfilter (5) um das Rauschen aus dem Überwachungssignal zu filtern, und eine Vergleichseinrichtung (7) aufweisen, um den Pegel des vom Bandpaßfilter gefilterten Signals zu detektieren und um ein Kennsignal auszugeben, falls der Pegel des Signals einen vorbestimmten Schwellenpegel übersteigt.

9. Basisstation nach einem der Ansprüche 5 bis 8,
dadurch gekennzeichnet, daß die Signal-Bearbeitungseinrichtungen zur Bestimmung des S/N Verhältnisses des empfangenen Überwachungssignals folgendes aufweisen:
- ein Bandpaßfilter (5), um das Rauschen aus dem Überwachungssignal zu filtern;
- eine Mischeinrichtung (4), um das empfangene Überwachungssignal mit dem gesendeten Überwachungssignal zu mischen, und einen nach der Technik geschalteter Kondensator hergestellter Fiefpaßfilter (10), um das Ausgangssignal der Mischeinrichtung zu filtern, wobei ein Ausgangssignal des Tiefpaßfilters (10) ein Signal ist, das zu dem im empfangenen Überwachungssignal vorhandenen Rauschen proportional ist;
- Einrichtungen (8, 9) zum Bestimmen des S/N Verhältnisses mittels des zum Rauschen proportionalen Signals und des bandpaß-gefilterten Überwachungssignals.

10. Basisstation nach Anspruch 8 oder 9,
dadurch gekennzeichnet, daß das Rauschen filternde Bandpaßfilter (5), ein Mehrwegfilter mit einer Bandbreite von vorzugsweise weniger als 1 Hz ist.

11. Basisstation nach Anspruch 9,
dadurch gekennzeichnet, daß ein zweiter nach der Technik geschalterter Kondensatoren hergestellter Bandpaßfilter (6) mit einer relativ breiteren Bandbreite zwischen daß das Rauschen filternde Bandpaßfilter (5) und den Einrichtungen (8, 9) geschaltet ist, die das S/N Verhältnis bestimmen.

## Revendications

1. Station de base pour système radio, comprenant, en vue de surveiller la qualité de la liaison radio entre la station de base et des stations mobiles :
un moyen de filtrage (1, 2, 16) pour engendrer un signal de surveillance à partir d'un signal d'onde rectangulaire (CK) ayant une fréquence de signal de surveillance désirée, la fréquence du signal de surveillance pouvant être modifiée en faisant varier la fréquence du signal rectangulaire,
un moyen d'émission (15) pour émettre le signal de surveillance vers une station radio mobile,
un moyen de réception (17) pour recevoir le signal de surveillance renvoyé par la station radio mobile,
des moyens de traitement de signaux (3 à 11) pour déterminer la qualité de la liaison radio utilisée au moyen du signal de surveillance reçu,
caractérisée en ce que les moyens de filtrage (1) comportent un filtre réalisé selon la technique de la capacité commutée, et commandé par un signal d'horloge (mCK) synchronisé avec le signal d'onde rectangulaire (CK).

2. Station de base selon la revendication 1,
caractérisée en ce que ledit moyen de filtrage est un filtre passe-bas.

3. Station de base selon la revendication 1 ou 2,
caractérisée en ce que le signal d'onde rectangulaire (CK) et le signal d'horloge (mCK) sont dérivés du même signal d'horloge primaire (CLK) au moyen de circuits diviseurs (2).

4. Station de base selon la revendication 1, 2 ou 3,
caractérisée en ce que la fréquence du signal d'horloge (mCK) est un multiple du signal d'onde rectangulaire (CK).

5. Station de base pour système radio, comportant, en vue de surveiller la qualité d'une liaison radio entre une station de base et des stations mobiles
un moyen de filtrage (1, 2, 16) pour engendrer un signal de surveillance à partir d'un signal d'onde rectangulaire (CK) ayant une fréquence de signal de surveillance désirée, la fréquence du signal de surveillance pouvant être modifiée en faisant varier la fréquence du signal rectangulaire,
un moyen d'émission (15) pour l'émission du signal de surveillance vers une station radio mobile,
un moyen de réception (17) pour la réception du signal de surveillance renvoyé par la station radio mobile,
des moyens de traitement de signaux (3 à 11) pour déterminer la qualité de la liaison radio utilisée au moyen du signal de surveillance reçu,
caractérisée en ce que les moyens de traitement de signaux comportent des filtres (3, 5, 6, 8, 9) réalisés selon la technique de la capacité commutée, et commandés par un ou plusieurs signaux d'horloge (mCK) synchronisés avec le signal de surveillance.

6. Station de base selon la revendication 5,
caractérisée en ce que le signal d'onde rectangulaire (CK) et le signal d'horloge (mCK) sont dérivés du même signal d'horloge primaire (CLK) par des circuits diviseurs (2).

7. Station de base selon la revendication 5 ou 6,
caractérisée en ce que la fréquence du signal d'horloge (mCK) est un multiple du signal d'onde rectangulaire (CK).

8. Station de base selon la revendication 5, 6 ou 7,
caractérisée en ce que les moyens de traitement de signaux comportent, en vue de l'identification du signal de surveillance reçu, un filtre passe-bande à bande étroite (5) pour éliminer par filtrage les bruits du signal de surveillance, ainsi qu'un moyen comparateur (7) pour détecter le niveau du signal filtré par le filtre passe-bande, et fournir un signal d'identification si le niveau du signal dépasse un seuil prédéterminé.

9. Station de base selon l'une quelconque des revendications 5 à 8,
caractérisée en ce que les moyens de traitement de signaux comprennent, en vue de déterminer le rapport signal/bruit du signal de surveillance reçu :
un filtre passe-bande (5) pour éliminer par filtrage le bruit du signal de surveillance,
un mélangeur (4) pour mélanger le signal de surveillance reçu avec le signal de surveillance émis, et un filtre passe-bas à capacité commutée (10) pour filtrer le signal de sortie du mélangeur, un signal de sortie du filtre passe-bas (10) étant proportionnel au bruit existant dans le signal de surveillance reçu,
des moyens (8, 9) pour déterminer le rapport signal/bruit au moyen dudit signal proportionnel au bruit et du signal de surveillance filtré par le filtre passe-bande.

10. Station de base selon la revendication 8 ou 9,
caractérisée en ce que ledit filtre passe-bande qui filtre les bruits est un filtre à voies multiples dont la largeur de bande est de préférence inférieure à 1 Hz.

11. Station de base selon la revendication 9,
caractérisée en ce qu'un deuxième filtre passe-bande à capacité commutée (6) d'une largeur de bande relativement plus grande est monté entre le filtre passe-bande (5) qui filtre les bruits et les moyens (8, 9) qui déterminent le rapport signal/bruit.
